# EUROPÄISCHE PATENTSCHRIFT

(11) **EP 1 970 179 B1**
(45) Veröffentlichungstag und Bekanntmachung des Hinweises auf die Patenterteilung: **14.09.2011**
(21) Anmeldenummer: 08004809.3
(22) Anmeldetag: 14.03.2008
(51) Int. Cl.: B28B 23/00, B28B 23/02, B28B 19/00, E04C 2/54

(54) **Verfahren zur Herstellung eines lichtdurchlässigen Mehrschicht-Verbund-Bauelementes für Fassaden und so hergestelltes Bauelement**
Method for producing a translucent multilayer composite component for facades and a component manufactured thereby
Procédé de fabrication d'un composant composite multicouche translucide pour façades et un composant ainsi fabriqué

(30) Priorität: 15.03.2007 DE 102007013199
(43) Veröffentlichungstag der Anmeldung: 17.09.2008
(73) Patentinhaber: LCT GesmbH, 8181 St. Ruprecht an der Raab (AT)
(72) Erfinder: Fischer, Oliver, 6840 Götiz (AT)
(74) Vertreter: Riebling, Peter

(56) Entgegenhaltungen:
- DE-A1- 10 160 214
- JP-A- 4 288 203
- JP-A- 2006 220 981

## Beschreibung

Die Erfindung betrifft ein lichtdurchlässiges Mehrschicht-Verbund-Bauelement, insbesondere für Fassaden und andere Bauwerke, welches im Außen- und Innenbereich eingesetzt werden kann, gemäß dem Oberbegriff des Anspruchs 1, sowie das Verfahren zu dessen Herstellung gemäß dem Oberbegriff der Ansprüche 16 und 17.

Ein Mehrschicht-Verbund-Bauelement für Fassaden und andere Bauwerke gemäß dem Oberbegriff des Anspruchs 1 ist aus DE-A1-101 60 214 bekannt.

Mit dem Gegenstand der DE 93 10 500 U1 ist ein lichtdurchlässiges Bauelement bekannt geworden, bei dem Lichtleiterkabel in ein Bauelement aus Beton oder aus Beton und mindestens einem weiteren Material eingegossen werden.

Lichtleiterkabel bestehen in der Regel aus mehreren lichtleitenden Glasfaserbündeln, die durch eine lichtundurchdringliche, isolierende Umhüllung umgeben sind. Solche Lichtleiterkabel sind relativ biegeschlaff und sind deshalb nicht geeignet, ohne weitere Vorkehrungen in einen Betonwerkstoff eingegossen zu werden.

Sie werden beim Eingießvorgang verbogen oder können sogar abscheren. Eine zusätzliche Festigkeit für dieses Betonelement ist durch die biegeschlaffen Lichtleitkabel nicht gewährleistet.

Mit der PCT 031097954 A2 ist ein weiteres Bauelement aus einem Betonwerkstoff bekannt geworden, in dem einzelne Lichtleitfasern eingebettet sind.

Es ist außerordentlich schwierig, solche sehr feinen und fragilen Lichtleitfasern in einen solchen Betonwerkstoff einzugießen. Beim Eingießvorgang neigen die lediglich etwa 50 mm im Durchmesser messenden Lichtleitfasern zum Abscheren, wodurch der Lichtleiteffekt vollständig unterbunden wird. Die Lichtausbeute bei einem solchen Bauelement ist deshalb gering. Eine zusätzliche Stabilität des Betonwerkstoffes durch die dort eingegossenen Lichtleitfasern wird nicht gewährleistet.

JP 2006-220981 A1 offenbart ein Verfahren gemäß dem Oberbegriff der Ansprüche 16 und 17 mit Schritten worin Lichtleitfasern in einer Spannvorrichtung eingespannt, die dann die unter Vorspannung stehenden Lichtleitfasern mit einem aushärtbaren Verbundwerkstoff ausgegossen werden.

Die DE 10 2005 042 235 A1 offenbart Lichtleitfasern, die in einem Formkörper aus Schaumstoff in einer Matrix eingebettet sind. Die Matrix besteht aus einem Polymer-Werkstoff, insbesondere einem Polymer-Schaumstoff. Ein solcher Formkörper kann als Wand- oder Deckenplatte, für Gewächshäuser oder in Kraftfahrzeugen verwendet werden.

Das in dieser Druckschrift angegebene Herstellungsverfahren sieht ebenfalls vor, dass die Lichtleitfasern zunächst in einem Formwerkzeug eingespannt werden und dann Polymergranulate oder eine fließfähige Reaktivharzmischung in die form eingefüllt wird.

Bei der JP 4-288203 A werden Lichtleitfasern lediglich in einem unausgefüllten Hohlblock aufgespreizt und an der Stirnseite angeschlossen. Ein Verguss der Lichtleitfasern ist nicht vorgesehen.

Bei der EP 1 305 159 B1 wird ein Leichtbauelement aus einem Mehrwandgewebe hergestellt ist, welches mit einem geblähten, thermoplastischen polymeren Material gefüllt ist, durch welches Lichtleitfasern hindurch greifen. Es handelt sich demzufolge um eine nicht aus Betonwerkstoff hergestellte Leichtbauplatte, bei der die einzelnen Blähkörper durch Verschmelzen oder Verkleben einen Verbund bilden, zwischen dem für den Lichttransport geeignete Glasfasern eingebracht sind.

Auch hier ist die Herstellung eines solchen Leichtbauelementes stark erschwert, denn die sehr empfindlichen Lichtleitfasern neigen beim Einfüllen und Aushärten des polymeren geblähten Materials zwischen den Wänden des Mehrwandgewebes zum Abscheren und Brechen, wodurch die Lichtausbeute eines solchen Leichtbauelementes stark eingeschränkt ist.

Der Erfindung liegt deshalb die Aufgabe zugrunde, ein Verfahren und ein Element der eingangs genannten Art so weiterzubilden, dass eine selbsttragende, wärmeisolierende, lichtleitende Betonplatte geschaffen werden kann. Zur Lösung der gestellten Aufgabe ist die Erfindung durch die technische Lehre des Anspruches 1 gekennzeichnet.

Wesentliches Merkmal der Erfindung ist, dass das lichtdurchlässige Bauelement aus einem Mehrschicht-Verbund-Element besteht, wobei an der Sichtseite eine Vorsatzschicht aus einem Betonwerkstoff angeordnet ist, hinter der mindestens im Abstand eine Dämmschicht angeordnet ist, die wiederum an ihrer Rückseite mit einer Tragschicht aus einem Betonwerkstoff verbunden ist und dass mindestens alle drei Schalen von einem oder mehreren Lichtleitkörpern durchsetzt sind.

Mit der gegebenen technischen Lehre ergibt sich der wesentliche Vorteil, dass nun eine tragfähige, selbsttragende Mehrschicht-Verbundplatte vorgeschlagen wird, die erstmals im Fassadenbau eingesetzt werden kann, denn erfindungsgemäß ist vorgesehen, dass die Vorsatzschicht an ihrer Rückseite mit einer Dämmschicht verbunden ist und die Dämmschicht ihrerseits an ihrer Rückseite mit einer aus Betonwerkstoff bestehenden Tragschicht verbunden ist.

Es wird also eine Dreischicht-Verbundplatte vorgeschlagen, die sich dadurch auszeichnet, dass alle drei Schichten durch mindestens einen Lichtleitkörper durchsetzt sind.

Damit ergibt sich der Vorteil, dass eine solche Mehrschicht-Verbundplatte nun erstmals im Fassadenbau als lichtleitendes Betonelement eingesetzt werden kann, was beim Stand der Technik nicht der Fall war.

Die genannte EP 1 305 159 B1 sah nur eine Leichtbauplatte vor, die jedoch nicht tragfähig ist, so dass sie als Fassadenplatte nicht eingesetzt werden kann.

Die PCT-WO 031097954 Al sah hingegen eine Betonplatte vor, die lediglich aus einem einzigen, durchgehenden Betonwerkstoff bestand, so dass die Dämmeigenschaften dieser Platte außerordentlich schlecht sind.

Hier setzt die Erfindung ein, die nun erstmals vorsieht, dass eine mindestens aus drei Schichten bestehende Verbundplatte vorgesehen ist, die als lichtleitendes Element ausgebildet ist.

Zur Verwirklichtung dieser Aufgabe gehören mehrere erfinderische Schritte gemäß der Lehre der Ansprüche 16 und 17 und wie nachfolgend begründet wird.

Es musste ein neuartiges Verfahren entwickelt werden, um überhaupt die Voraussetzungen für eine Mehrschichtplatte mit lichtleitenden Eigenschaften zu ermöglichen. Hierzu sieht das Verfahren vor, dass zunächst eine Dämmschicht aus einem gut dämmenden Kunststoffmaterial vorgesehen wird, die bevorzugt als Platte ausgebildet ist. Das Material dieser Dämmschicht besteht bevorzugt aus einem geschäumten Kunststoff oder einem anderen gut dämmenden Material, wie z. B. Kunststoff-Verbund-Werkstoffe mit Holz, mit Kunststoffkügelchen und anderen Dämmelementen, die im Außenbereich einsetzbar sind und im Übrigen wasserabstoßend ausgebildet sind.

In einem zweiten Verfahrensschritt werden in diese Dämmschicht eine Reihe von Ausnehmungen eingebracht, durch welche nun Lichtleitkörper hindurch gesteckt werden. Die Lichtleitkörper überragen die Dämmschicht an der Ober-und Unterseite um ein beträchtliches Maß.

Die so mit Lichtleitkörpern "gespickte" Dämmschicht wird nun in eine Schalung eingebracht, an deren Boden eine noch nicht ausgehärtete Betonmasse (bevorzugt aus einem SCC-Beton) eingefüllt ist.

Die die eine Seite der Dämmschicht überragenden Lichtleitkörper dringen nun durch diese Betonschicht hindurch und gehen in dieser Betonschicht einen innigen Verbund ein, sie werden soweit hindurch gesteckt, dass sie bis zum Grund der Schalung hindurchreichen.

Danach wird die Dämmschicht auf die Oberfläche der noch nicht ausgehärteten Betonschicht aufgedrückt, so dass dort ebenfalls ein inniger Verbund zwischen dieser Seite der Dämmschicht und der Oberseite der Betonschicht herbeigeführt wird.

Schließlich wird auch auf die andere Seite der Dämmschicht eine weitere Betonmasse aufgegossen, die ebenfalls einen innigen Verbund mit der auf dieser Seite herausragenden Lichtleitkörpern eingeht und im Übrigen auf die Oberfläche der Dämrnschicht aufgefüllt wird.

Damit wird ein Dreischicht-Verbundkörper aus aushärtenden Betonrnassen gebildet, wobei die eine Seite dann später als Vorsatzschicht ausgebildet ist, die über die besagte Dämrnschicht von der hinteren Tragschicht getrennt ist. Alle drei Schichten werden durch die beschriebenen Lichtleitkörper durchsetzt und durchgriffen.

In einem Übergang zwischen dem Verfahrensschritt 2 und dem Verfahrensschritt 3 kann es noch vorgesehen werden, dass in die Dämmschicht noch zusätzliche Verankerungselemente eingesetzt werden, die bevorzugt als u-förmig profilierte Verbundnadeln ausgebildet sind.

Diese Verbundnadeln stellen einen lastübertragenden Verbund zwischen der Vorsatzschicht, durch die Dämmschicht hindurch in Richtung auf die Tragschicht her.

In einer Weiterbildung des letzten Verfahrensschrittes kann im Übrigen koch vorgesehen werden, dass in die in die Schalung eingefüllte noch nicht ausgehärtete Betonmasse ein oder mehrerer Armierungsgitter eingelegt werden.

Das gleiche gilt auch für einen weiteren Verfahrensschritt, der vorsieht, dass beim Aufgießen der oberen Tragschicht auf die Dämmschicht ebenfalls ein oder mehrere im Abstand voneinander angeordnete Armierungsgitter angeordnet werden.

Damit wird eine hochbelastbare, selbsttragende Fassadenplatte geschaffen, die in sehr großen Formaten raumsparend verbaut werden kann.

Bevorzugte Formate sind z. B. 1 m X 2 m oder auch wesentlich größere Wandelemente, weil es sich um ein vollkommen selbsttragendes Bauelement handelt.

Wichtig ist nun, dass bei dem vorgenannten Herstellverfahren erkannt werden musste, dass die Lichtleitkörper sich während des Eingießens der Betonmassen nicht unzulässig verformen dürfen.
Aus diesem Grund sieht die vorliegende Erfindung vor, dass die Lichtleitkörper biegesteif ausgebildet sind.

Dies ist ein wesentlicher Unterschied zum Stand der Technik, weil dort entweder biegbare Lichtleiterkabel oder sogar dünne haargroße Lichtleitfasern verwender wurden.

Das vorliegende Verfahren ist also nur deshalb fabrikationstechnisch durchsetzbar, wenn dafür gesorgt wird, dass die die Dämmschicht durchsetzenden Lichtleitkörper sich während des Eindrückens in die untere Betonschicht und während des Aufgießens der oberen Betonschicht nicht unzulässig abscheren, verbiegen oder in anderer Weise ihre Formgebung verlieren.

Deshalb sieht die Erfindung vor, dass die Lichtleitkörper biegesteif ausgebildet sind.

Für die Ausbildung von biegesteifen Lichtleitkörpern gibt es eine Vielzahl unterschiedlicher Formgebungen, die alle vom Erfindungsgegenstand der vorliegenden Erfindung umfasst sein sollen.

Es können Lichtleitstäbe verwendet werden, die in beliebiger Weise profiliert sind. Solche Profilformen können rund, dreieckig, viereckig, quadratisch, oval, sechseckig oder in anderer beliebiger Profilgebung vorgesehen werden.

Es können auch ein oder mehrere Lichtleitstäbe aus Bündeln von Lichtleitfasern geschaffen werden, die so stark gebündelt sind, dass der daraus gebildete Lichtleitstab absolut biegestabil ist und die entsprechenden Abscherkräfte aufnimmt, wie sie beim Ausgießen der Form entstehen.

In einer anderen Ausgestaltung ist es vorgesehen, dass statt einzelnen stabförmigen Lichtleitkörpern auch Lichtleitplatten verwendet werden, die scheibenfömig ausgebildet sind. Die Profilform dieser Scheiben ist bevorzugt rechteckig. Die Scheiben können jedoch auch quadratisch ausgebildet sein. Ebenso ist es möglich, solche Scheiben mit leichter Ovalform oder mehrkantig 1 auszubilden, was die lichteintretende Stirnfläche und ebenso die lichtaustretende Stirnfläche beeinflusst.

Es ist im Übrigen nicht lösungsnotwendig, dass bei allen Lichtleitkörpern nach der Erfindung die lichteinlassende und lichtaufnehmende Stirnseite genau gleich ausgebildet ist wie die lichtauslassende Stirnseite.

Hier sieht die Erfindung vor, dass von der lichtaussendenden Stirnseite noch zusätzliche Lichtdiffusoren angebracht sind. Solche Lichtdiffusoren dienen dem gemäß der Lichtverteilung und können beliebige Formgebungen aufweisen.

Auf diese Weise ist es möglich, an der lichtaussendenden Seite Logos, bestimmte Lichteffekte, eingefärbte Lichtelemente und dergleichen zu bilden.

Ebenso ist es möglich, textile Flächengebilde, die in Form von textilen Bindungen solche Glasfasern halten, zu bündeln, zusammenzurollen und diese Bündel als Stäbe in Form von Lichtleitkörpern in die Dämmschicht einzusetzen.

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander.

Alle in den Unterlagen offenbarten Angaben und Merkmale, insbesondere die in den Zeichnungen dargestellte räumliche Ausbildung, werden als erfindungswesentlich beansprucht, soweit sie einzeln oder in Kombination gegenüber dem Stand der Technik neu sind.

Im Folgenden wird die Erfindung anhand von lediglich einen Ausführungsweg darstellenden Zeichnungen näher erläutert. Hierbei gehen aus den Zeichnungen und ihrer Beschreibung weitere efindungswesentliche Merkmale und Vorteile der Erfindung hervor.

Es zeigen:
Figur 1: perspektivische Ansicht eines Dreischicht-Verbundelementes nach der Erfindung
Figur 2: der Schnitt durch das Verbundelement nach Figur 1 mit Hinzufügung weiterer Einzelheiten
Figur 3: ein Verbundelement nach Figur 1 mit der Hinzunahme von Verbundnadeln
Figur 4: ein Verfahrensschritt bei der Herstellung des Verbundelementes
Figur 5 bis 12: verschiedene Ausführungsformen von Lichtleitkörpern

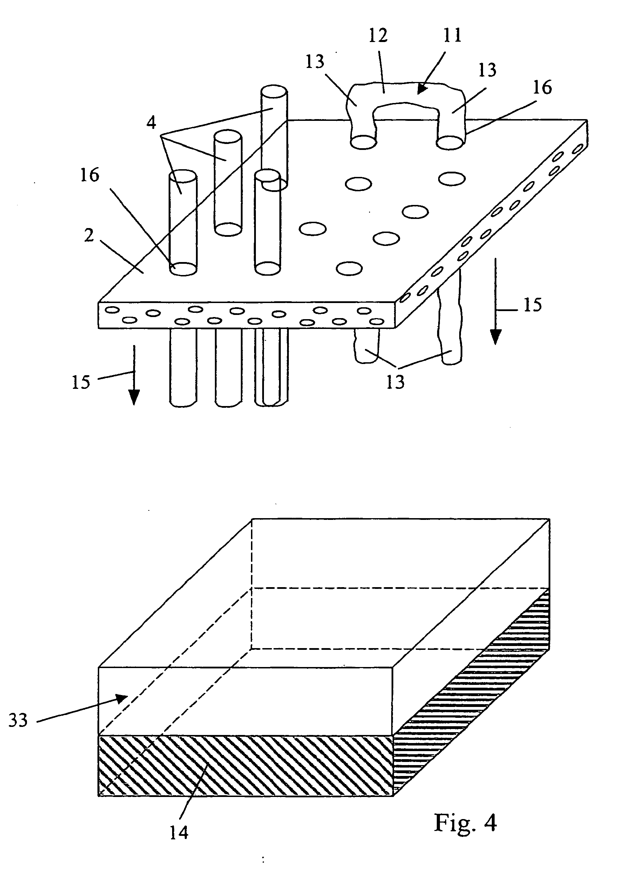

Anhand der Figur 4 wird zunächst die Herstellung eines erfindungsgemäßen Mehrschicht-Verbundelementes10 dargestellt.

In der Zeichnung ist erkennbar, dass zunächst eine Dämmschicht 2 hergestellt wird, die z. B. die Form einer geschäumten Kunststoffplatte aufweisen kann.

In diese Dämmschicht werden durchsetzende Ausnehmungen 16 angebracht, die im gezeigten Ausführungsbeispiel als Bohrungen ausgebildet sind.

Durch diese Ausnehmungen werden nun einzelne Lichtleitkörper 4 hindurch gesteckt, die im Ausführungsbeispiel als Lichtleitstäbe ausgebildet sind.

Hierbei ist wichtig, dass die Lichtleitkörper sowohl die Oberseite der Dämmschicht als auch die Unterseite um ein wesentliches Maß übertragen.

Zusätzlich ist in Figur 4 dargestellt, dass zur Verbesserung des Verbundes der oberen und der unteren Betonschicht 1, 3 noch zusätzliche Verbundnadeln 11 verwendet werden können, die ebenfalls durch zugeordnete Ausnehmungen 16 in der Dämmschicht 2 hindurch gesteckt werden.

Jede Verbundnadel 11 besteht hierbei aus einem Basisschenkel 12, der durch werkstoffeinstückig daran ansetzende Seitenschenkel 13 etwa eine U-Form aufweist.

Der Basisschenkel 12 und die Seitenschenkel 13 sind in gewellter oder gezackter Außenkontur vorgesehen, um einen besseren Verbund in den Betonschichten 1, 3 zu ermöglichen.

Der so hergestellte Körper wird in Figur 4 in den Pfeilrichtungen 15 nach unten in eine Schalung 33 abgesenkt, deren Bodenfläche bereits schon mit einer noch nicht ausgehärteten Betonschicht 14 aus einem SCC-Beton ausgefüllt ist.

Der Begriff SCC bedeutet "Self Compacting Concrete" und meint, dass es keiner weiteren Verdichtungsmaßnahmen für die Betonschicht 14 bedarf.

Selbstverständlich kann es auch vorgesehen sein, dass die gesamte Schalung 33 gerüttelt oder vibriert wird, um eventuelle Lufteinschlüsse zu vermeiden. Die Dämmschicht 2 mit den dort eingesteckten Lichtleitkörpern 4 wird dem gemäß in Pfeilrichtung 15 so weit in die Schalung 33 eingesteckt, dass die unteren Stirnseiten der Lichtleitkörper an der Bodenfläche der Schalung anstoßen, so dass diese dort satt anliegen.

Gleichzeitig wird die Dämmschicht 2 auf die Oberfläche der Betonschicht 14 aufgedrückt, so dass auch an dieser Oberfläche ein inniger Verbund mit der Dämmschicht 2 entsteht.

Danach wird auf die Oberseite der Dämmschicht 2 eine weitere Betonschicht aufgegossen, die die spätere Tragschicht 3 bildet.

Die Betonschicht 14 bildet dann die Vorsatzschicht 1

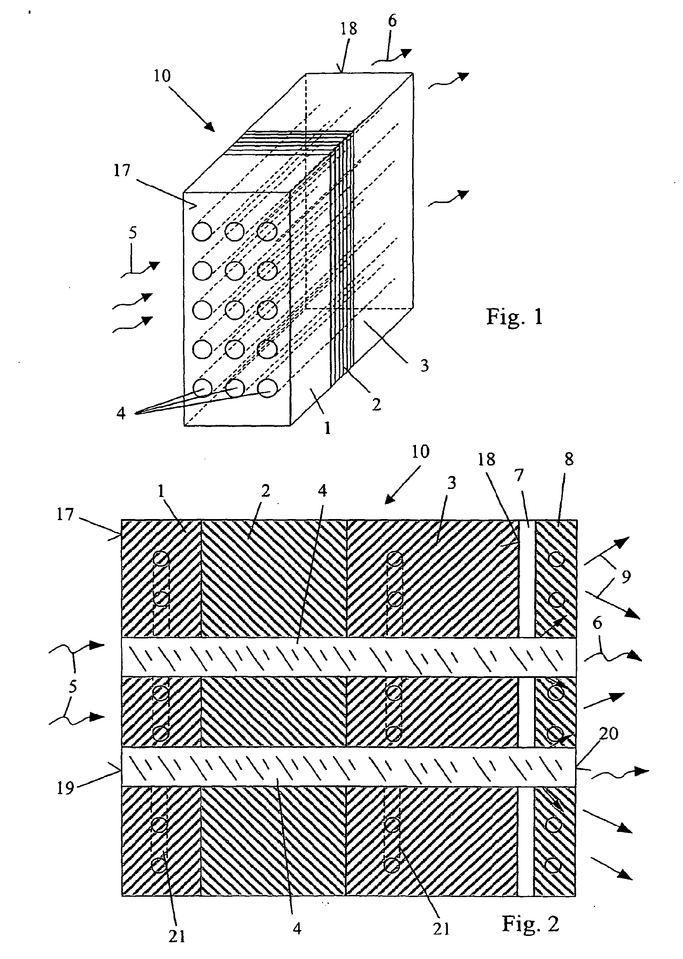

Nach dem Aushärten der beiden Betonschichten wird damit ein Dreischicht-Verbundelement 10 hergestellt, wie es in Figur 1 näher dargestellt ist.

Nach dem Entnehmen des Verbundelementes 10 aus der Schalung 33 werden die jeweils gegenüberliegenden Stirnseiten 17 und 18 angeschliffen, um die lichtaufnehmenden Stirnseiten der Lichtleitkörper 4 auf der Seite der Stirnseite 17 freizulegen. Damit können diese Stirnseiten das Licht in Pfeilrichtung 5 aufnehmen und durch ihren Körper durch den gesamten Mehrschicht-Verbund der Schichten 1, 2, 3 hindurchleiten und dort an der Stirnseite 18 wieder in Pfeilrichtung 6 aussenden.

Die Stirnseite 18 ist ebenfalls bearbeitet, um auch dort die entsprechenden Stirnseiten der Lichtleitkörper 4 freizulegen.

Die Figur 2 zeigt, dass in dem Bereich der Vorsatzschicht 1 und in dem Bereich der Tragschicht 3 noch zusätzliche Armierungsgitter 21 einlegbar sind.

Ferner zeigt die Figur 2, dass an der hinteren Stirnseite 18 noch eine Klebeschicht 7 angebracht werden kann und auf diese Klebeschicht ein oder mehrere Diffusoren 8 aufgeklebt sind. Diese Diffusoren umgeben die Querschnitte der Lichtleitkörper 4 irn Bereich der Stirnseite 18 und nehmen über den Weg der Totalreflektion Licht auf, welches dann in veränderter Form in den Pfeilrichtungen 9 abgegeben wird.

Die Diffusoren 8 können hierbei eingefärbt sein.

Es kann sich hierbei um Kunststoffscheiben oder um lackierte Oberflächen handeln.

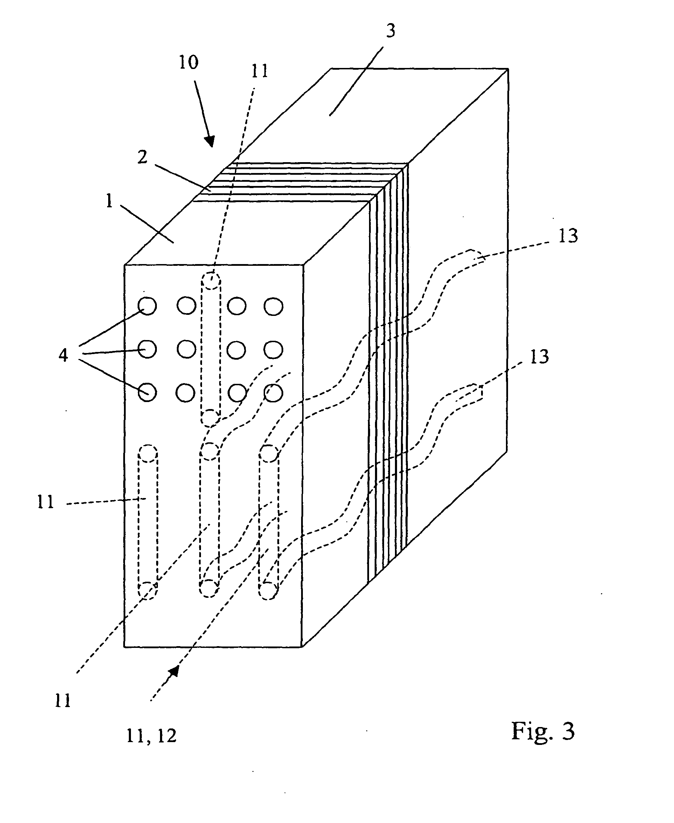

Die Figur 3 zeigt ein Mehrschicht-Verbundelement 10, wo erkennbar ist, dass ein oder mehrere Verbundnadeln 11 den tragfähigen Verbund zwischen der Vorsatzschicht 1 und der Tragschicht 3 durch die Dämmschicht 2 hindurchschaffen.

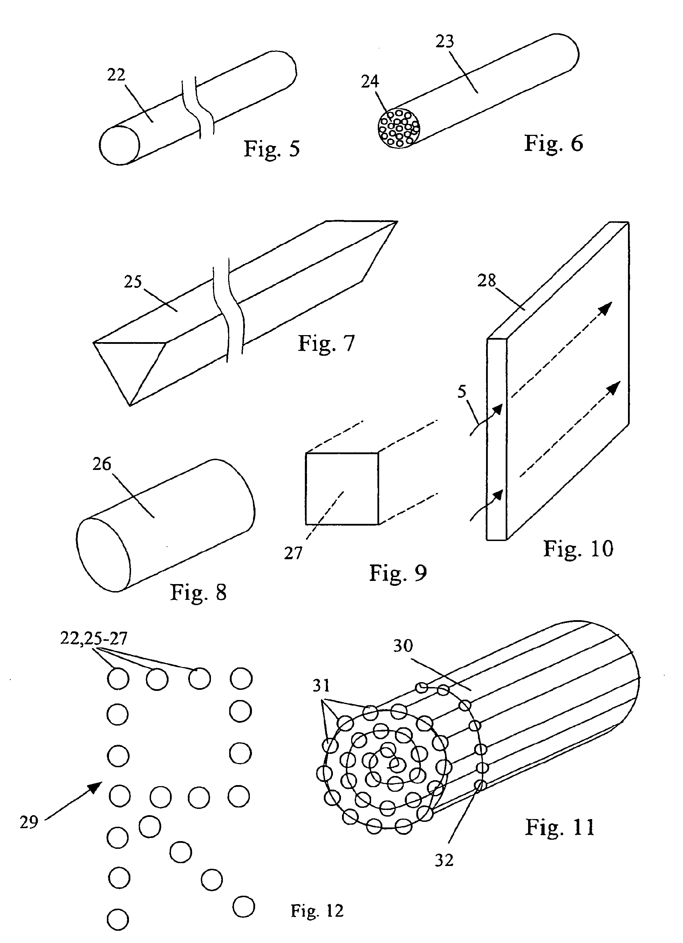

Die Figuren 5 bis 12 zeigen verschiedene Ausführungsbeispiele von Lichtleitkörpern.

Die Figur 5 zeigt einen Lichtleitstab 22 mit Rundprofil, während die Figur 6 ein Stabbündel 23 als rundprofilierter Lichtleitstab 22 zeigt, wobei jedoch eine Vielzahl von gebündelten Lichtleitfasern 24 das Stabprofil des Lichtleitstabes 22 bilden. Statt der runden Profilform zeigen die Figuren 7 bis 9 auch, dass ein Lichtleitstab 25 als Dreiecksprofil oder in Form des Lichtleitstabes 26 als Ovalprofil oder in Form des Lichtleitstabes 27 als Quadrat oder Rechteckprofil ausgebildet sein kann.

Die Figur 10 zeigt eine Lichtleitplatte 28, die als lichtaufnehmende Stirnseite ein Rechteckprofil aufweist und das Licht als Plattenelement durch den Mehrschicht-Verbundaufbau 1, 2, 3 hindurchleitet.

Gemäß Figur 11 kann auch ein textiles Flächengebilde 32 vorgesehen werden, welches eine Vielzahl von in Längsrichtung verlaufenden Lichtleitfasern 31 aufweist, die alle in einer textilen Flächenbindung (z. B. Wirk-oder Gewebeverbund) zusammengefasst sind.

Wird ein solcher Lichtleitfaserstoff zusammengerollt, bildet sich somit eine rundprofilierte Lichtleitermatte 30, die ebenfalls in der Art des Stabbündels 23 ausgebildet ist. Nur sind dort die Lichtleitfasern 31 durch ein textiles Flächengebilde 32 zusammengehalten.

Die Figur 12 zeigt, dass beliebige Profilformen zu bestimmten Logos zusammengestellt werden können. Die Zusammenstellung 29 zeigt z. B. den Buchstaben R angedeutet durch Zusammensetzung einer Vielzahl von unterschiedlichen Lichtleitstäben 22-31.

Wie im allgemeinen Beschreibungsteil darauf hingewiesen wurde, ist es nicht lösungsnotwendig, dass die lichtaufnehmende Stirnseite 19 der Lichtleitkörper 4 die gleiche Größe und den gleichen Querschnitt wie die lichtabgebende Stirnseite 20 hat.

Die Formgebung der einen Stirnseite 18 kann auch von der Formgebung der anderen gegenüberliegenden Stirnseite 19 abweichen.

Die Erfindung ist im Übrigen nicht darauf beschränkt, dass die Vorsatzschale 1 auf einer aushärtbaren Betonschicht bestehen muss. Es kommen auch noch andere aushärtbare Massen in Betracht, wie z. B. Holzverbundwerkstoffe, Mineralgussmassen, Tone, Kalke und dergleichen aushärtbare Massen.

Selbstverständlich können auch aushärtbare Kunststoffmassen für das Material der Vorsatzschicht 1 verwendet werden.

Gleiches gilt im Übrigen auch für die Tragschicht 3, die ebenfalls aus den vorgenannten Werkstoffen bestehen kann. Wichtig ist lediglich bei den beiden Schichten 1, 3, dass sie aus aushartbaren Werkstoffen bestehen und der Verbund dieser Werkstoffe 1, 2 und 3 zu einer selbsttragenden Mehrschicht-Verbundplatte 10 führt.

In einer alternativen Herstellungsmethode wird die mit Lichtleitkörpern "gespickte" Dämmschicht in eine vertikal stehende Schalung eingebracht, sodass auf beiden Seiten der Dämmschicht zwischen Dämmschicht und Schalung ein Hohlraum entsteht, in den die Lichtleitkörper hineinragen. Dieser Hohlraum kann nun auf beiden Seiten von oben durch ein Flutverfahren mit Beton gefüllt werden, so dass auf beiden Seiten die Lichtleitkörper umgossen werden und ein inniger Verbund zwischen Beton und Dämmschicht entsteht.

### Zeichnungslegende

- 1: Vorsatzschicht
- 2: Dämmschicht
- 3: Tragschicht
- 4: Lichtleiterkörper
- 5: Pfeilrichtung
- 6: Pfeilrichtung
- 7: Klebschicht
- 8: Diffusor
- 9: Pfeilrichtung
- 10: Mehrschicht-Verbundelement
- 11: Verbundnadel
- 12: Basisschenkel
- 13: Seitenschenkel
- 14: SCC-Beton
- 15: Pfeilrichtung
- 16: Ausnehmung
- 17: Stirnseite
- 18: Stirnseite
- 19: Stirnseite (Stab 4)
- 20: Stirnseite (Stab 4)
- 21: Armierungsgitter
- 22: Lichtleiterstab
- 23: Stabbündel
- 24: Lichtleitfaser
- 25: Lichtleitstab
- 26: Lichtleitstab
- 27: Lichtleitstab
- 28: Lichtleitplatte
- 29: Zusammenstellung
- 30: Lichtleitmatte
- 31: Lichtleitfaser
- 32: Textiles Flächengebilde
- 33: Schalung

## Patentansprüche

1. Mehrschicht-Verbund-Bauelement für Fassaden und andere Bauwerke, wobei das Bauelement aus einem Mehrschicht-Verbund-Element (10) besteht, welches an seiner Sichtseite eine Vorsatzschicht (1) aufweist, hinter der mindestens im Abstand eine Dämmschicht (2) angeordnet ist, die wiederum an ihrer Rückseite mit einer Tragschicht (3) verbunden ist, **dadurch gekennzeichnet, dass** die Vorsatzschicht (1) und/oder die Tragschicht (3) Holzverbundwerkstoffe, Mineralgussmassen, Polymerbeton, Tone, Kalke, Gips, Lehm, Kunststoffmassen und ähnlich aushärtbare Materialien aufweist und dass die lichtleitenden Körper als biegesteife Lichtleitstäbe (4) oder -platten ausgebildet sind, welche bei der Herstellung des Bauelementes in einer vorwiegend parallelen Anordnung zueinander im Inneren des Bauelementes angeordnet sind und das Bauelement lichtdurchlässig ausbilden, wobei mindestens alle drei Schichten (1, 2, 3) von einem oder mehreren Lichtleitstäben (4) oder -platten durchsetzt sind, die biegesteif ausgebildet sind.

2. Bauelement nach Anspruch 1, **dadurch gekennzeichnet, dass** das Bauelement als tragfähiges, selbsttragendes Mehrschicht-Verbundelement (10) ausgebildet ist.

3. Bauelement nach einem der vorhergehenden Ansprüche 1 bis 2, **dadurch gekennzeichnet, dass** die Dämmschicht (2) des Mehrschicht-Verbundelementes (10) aus einem plattenförmigen Kunststoffmaterial gebildet ist, welche verbesserte Dämmeigenschaften aufweist und flüssigkeitsresistent ausgebildet ist.

4. Bauelement nach einem der vorhergehenden Ansprüche 1 bis 3, **dadurch gekennzeichnet, dass** die Dämmschicht (2) durchsetzende Ausnehmungen (16) aufweist, die von den Lichtleitstäben (4) durchsetzt sind, welche die Ober-und Unterseite der Dämmschicht (2) überragen, wobei die überragenden Lichtleitstäbe (4) einer ersten Seite der Dämmschicht (2) eine, in einer Schalung (33) eingebrachte, noch nicht ausgehärtete Betonschicht (14), aus SCC-Beton, bis zum Grund durchdringen und die mit Armierungsgitter (21) durchsetzbare Vorsatzschicht (1) ausbilden, wobei die der Dämmschicht (2) zugewandten Oberfläche der Betonschicht (14) und die aufliegende Oberfläche der Dämmschicht (2) einen innigen Verbund ausbilden.

5. Bauelement nach einem der vorhergehenden Ansprüche 1 bis 4, **dadurch gekennzeichnet, dass** eine zweite Oberfläche der Dämmschicht (2) mit den überragenden Lichtleitstäben (4) eine aufgegossene Betonmasse aufweist, welche die überragenden Lichtleitstäbe (4) umschließt und im ausgehärteten Zustand die Tragschicht (3) ausbildet, welche mit Armierungsgitter (21) durchsetzbar ausgebildet ist.

6. Bauelement nach einem der vorhergehenden Ansprüche 1 bis 5, **dadurch gekennzeichnet, dass** in die Dämmschicht (2) Verankerungselemente einsetzbar sind, welche vorzugsweise als u-förmig profilierte Verbundnadeln (11) ausgebildet sind und einen lastübertragenden Verbund zwischen der Vorsatzschicht (1) durch zugeordnete Ausnehmungen (16) der Dämmschicht (2) hindurch in Richtung Tragschicht (3) ausbilden.

7. Bauelement nach Anspruch 6, **dadurch gekennzeichnet, dass** die Verbundnadel(11) einen Basisschenkel(12) aufweist, welcher werkstoffeinstückig mit daran ansetzenden Seitenschenkel (13) verbunden ist, wobei die Seitenschenkel (13) eine gewellte und/oder gezackte Außenkontur aufweisen und einen verbesserten Verbund in den Betonschichten (1,3) ausbildet.

8. Bauelement nach einem der vorhergehenden Ansprüche 1 bis 7, **dadurch gekennzeichnet, dass** die Lichtleitstäbe (22, 25, 26, 27) aus Bündel von Lichtleitfasern (24, 31) ausgebildet sind, welche eine ausreichende Biegestabilität aufweisen und notwendige Abscherkräfte aufnehmen.

9. Bauelement nach einem der vorhergehenden Ansprüche 1 bis 8, **dadurch gekennzeichnet, dass** die Lichtleitplatten (28) eine Rechteck- Quadrat-, Rund-, Oval- oder Mehrkantform im Querschnitt aufweisen, wobei die Form der lichtaufnehmenden Stirnseite der Lichtleitplatten (28) unterschiedlich zur Form der lichtabgebenden Stirnseite der Lichtleitplatten (28) ausbildbar ist.

10. Bauelement nach einem der vorhergehenden Ansprüche 1 bis 9, **dadurch gekennzeichnet, dass** die Lichtleitstäbe (4) als in textilen Bindungen, Wirk-oder Gewebeverbund, gehaltene Lichtleitfasern (31) ausgebildet sind und ein textiles Flächengebilde (32) ausbilden, welches gebündelt und/oder gewellt und/oder als rundprofilierte Lichtleitermatte (30) zusammengerollt in die Dämmschicht (2) eingebracht.

11. Bauelement nach einem der vorhergehenden Ansprüche 1 bis 10, **dadurch gekennzeichnet, dass** das Verbundelement (1 0) an seinen angeordneten Stirnseiten (17, 18) angeschliffen ist und die lichtaufnehmenden Stirnseiten der Lichtleitstäbe oder -platten (4) auf der Seite der Stirnseite (17) freilegt, wobei diese Stirnseiten Licht aufnehmen und durch ihren Körper durch den gesamten Mehrschicht-Verbund der Schichten (1, 2 , 3) hindurchleiten und an der bearbeiteten Stirnseite (18) wieder aussenden.

12. Bauelement nach einem der vorhergehenden Ansprüche 1 bis 11, **dadurch gekennzeichnet, dass** die Stirnseite (18) eine Klebeschicht (7) aufweist, welche zur klebenden Befestigung von Diffusoren (8) ausgebildet ist, die mittels einer Totalreflektion Licht aufnehmen und in unveränderter Form abgeben.

13. Bauelement nach einem der vorhergehenden Ansprüche 1 bis 12, **dadurch gekennzeichnet, dass** die Lichtleitstäbe oder -platten nur selektiv an ganz bestimmten Stellen eingesetzt sind, beispielsweise in Form von Logos oder Schriftzügen sodass das Bauelement nur an diesen Stellen von Licht durchdringbar ist.

14. Bauelement nach einem der vorhergehenden Ansprüche 1 bis 13, **dadurch gekennzeichnet, dass** die Lichtleitstäbe oder -platten mit unterschiedlich gefärbten Filtern ausgestattet sind, um farbige Muster oder Bilder sichtbar werden zu lassen.

15. Bauelement nach einem der vorhergehenden Ansprüche 1 bis 14, **dadurch gekennzeichnet, dass** die Lichtleitstäbe oder -platten auch schräg in das Bauelement eingesetzt werden.

16. Verfahren zur Herstellung eines lichtdurchlässigen Mehrschicht-Verbund-Bauelementes für Fassaden und andere Bauwerke, wobei das Bauelement vorwiegend eine aus Beton gebundene Werkstoffstruktur mit lichtleitenden Körpern aufweist, welche bei der Herstellung des Bauelementes in einer vorwiegend parallelen Anordnung zueinander im inneren des Bauelementes angeordnet sind und das Bauelement lichtdurchlässig ausbilden, wobei das Verfahren durch folgende Schritte **gekennzeichnet** ist:
- Herstellen einer Dämmschicht (2) mit durchsetzten Lichtleiterstäben (4) oder -platten und Verbundnadeln (11), welche biegesteif ausgebildet sind;
- Herstellen einer Vorsatzschicht (1) mittels der Dämmschicht (2) und einer Betonschicht (14);
- Absenken der Dämmschicht (2) in eine Schalung (33), deren Grund mit einer noch nicht ausgehärteten Betonschicht (1 4) aus SCC-Beton befüllt ist;
- Eindrücken der biegesteifen Lichtleiterstäbe (4) oder -platten in die Betonschicht (14) bis auf die Bodenfläche der Schalung (33), wobei die sich zugewandten Oberflächen der Betonschicht (14) und der Dämmschicht (2) einen Verbund bilden;
- Herstellen der Tragschicht (3) mittels Aufgießen von Betonmaterial auf die weitere, der Vorsatzschicht (1) abgewandten Oberfläche der Dämmschicht (2);
- Entnehmen des ausgehärteten Mehrschicht- Verbundelementes (10) aus der Schalung (33);
- Schleifen von Stirnseiten (17, 18) des Mehrschicht- Verbundelementes (10) und Freilegen der lichtaufnehmenden und lichtabgebenden Stirnflächen der Lichtleiterstäbe (4) oder -platten.

17. Verfahren zur Herstellung eines lichtdurchlässigen Mehrschicht-Verbund-Bauelements für Fassaden und andere Bauwerke, wobei das Bauelement vorwiegend eine aus Beton gebundene Werkstoffstruktur mit lichtleitenden Körpern aufweist, welche bei der Herstellung des Bauelements in einer vorwiegend parallelen Anordnung zueinander im Inneren des Bauelementes angeordnet sind und das Bauelement lichtdurchlässig ausbilden, wobei das Verfahren durch folgende Schritte **gekennzeichnet** ist:
- Herstellen einer Dämmschicht mit durchsetzten Lichtleitstäben oder -platten und Verbundnadeln, welche biegesteif ausgebildet sind;
- Absenken der Dämmschicht in eine vertikal stehende Schalung; Ausgießen der Hohlräume zwischen Schalung und Dämmschicht mit Beton, Holzverbundwerkstoffen, Mineralgussmassen, Polymerbeton, Tonen, Kalken, Gips, Lehm, Kunststoffmassen oder ähnlich aushärtbaren Materialien;
- Entnehmen des ausgehärteten Mehrschicht-Verbundelementes aus der Schalung;
- Schleifen von Stirnseiten des Mehrschicht-Verbundelementes und Freilegen der lichtaufnehmenden und lichtabgebenden Stirnflächen der Lichtleitstäbe oder -platten.

18. Verfahren nach Anspruch 16 oder 17, **dadurch gekennzeichnet, dass** die zur Anwendung des Verfahrens und Herstellung der Vorrichtung erforderlichen Vorrichtungselemente gemäß den Ansprüchen 1 bis 15 verwendet werden.

## Claims

1. Multi-layer composite component for facades and other constructions, wherein the component consists of a multi-layer composite element (10), which has a facing layer (1) on its visible side, behind which, at least at a spacing, an insulating layer (2) is arranged, which is in turn connected at its rear to a support layer (3), **characterised in that** the facing layer (1) and/or the support layer (3) has wood composite materials, mineral casting compounds, concrete polymer, clays, chalks, gypsum, loam, plastics material compounds and similarly hardenable materials and **in that** the light-conducting bodies are configured as flexurally rigid light-guide rods (4) or plates, which, when the component is produced, are arranged in a predominantly parallel arrangement with respect to one another in the interior of the component and make the component translucent, at least all three layers (1, 2, 3) having one or more light-guide rods (4) or plates passing through them, which are flexurally rigid.

2. Component according to claim 1, **characterised in that** the component is configured as a load-bearing, self-supporting multi-layer composite element (10).

3. Component according to either of the preceding claims 1 or 2, **characterised in that** the insulating layer (2) of the multi-layer composite element (10) is formed from a plate-like plastics material, which has improved insulating properties and is liquid-resistant.

4. Component according to any one of the preceding claims 1 to 3, **characterised in that** the insulating layer (2) has recesses (16) passing through it, which have light-guide rods (4) passing through them, which project over the upper and lower side of the insulating layer (2), the projecting light-guide rods (4) of a first side of the insulating layer (2) penetrating a concrete layer (14) made of SCC concrete that has not yet hardened, introduced in a sheathing (33), to the base, and forming the facing layer (1), which can have a reinforcing grid (21) passing through it, the surface of the concrete layer (14) facing the insulating layer (2) and the surface thereon of the insulating layer (2) forming an intimate interconnection.

5. Component according to any one of the preceding claims 1 to 4, **characterised in that** a second surface of the insulating layer (2) with the projecting light-guide rods (4) has a cast-on concrete compound, which surrounds the projecting light-guide rods (4) and, in the hardened state, forms the support layer (3), which can have a reinforcing grid (21) passing through it.

6. Component according to any one of the preceding claims 1 to 5, **characterised in that** anchoring elements, which are preferably configured as interconnecting needles (11), which are profiled as a U-shape and form a load-transmitting interconnection between the facing layer (1) through associated recesses (16) of the insulating layer (2) in the direction of the support layer (3), can be inserted in the insulating layer (2).

7. Component according to claim 6, **characterised in that** the interconnecting needle (11) has a base leg (12), which is connected in a material-integrating manner to side legs (13) attaching thereto, the side legs (13) having an undulating and/or jagged outer contour and forming an improved interconnection in the concrete layers (1, 3).

8. Component according to any one of the preceding claims 1 to 7, **characterised in that** the light-guide rods (22, 25, 26, 27) are formed from bundles of light-guide fibres (24, 31) which have adequate flexural stability and absorb necessary shear forces.

9. Component according to any one of the preceding claims 1 to 8, **characterised in that** the light-guide plates (28) have a rectangular, square, round, oval or multi-sided shape in cross section, it being possible to configure the shape of the light-absorbing end face of the light-guide plates (28) differently to the shape of the light-emitting end face of the light-guide plates (28).

10. Component according to any one of the preceding claims 1 to 9, **characterised in that** the light-guide rods (4) are configured as light-guide fibres (31) held in textile bonds, knitted or woven composite, and form a textile fabric (32), which is introduced into the insulating layer (2), bundled and/or undulated and/or rolled up as a round-profiled light-guide mat (30).

11. Component according to any one of the preceding claims 1 to 10, **characterised in that** the composite element (10) is ground at its arranged end faces (17, 18) and exposes the light-absorbing end faces of the light-guide rods or plates (4) on the side of the end face (17), these end faces absorbing light and guiding it through their body through the entire multi-layer composite of the layers (1, 2, 3) and emitting it again at the treated end face (18).

12. Component according to any one of the preceding claims 1 to 11, **characterised in that** the end face (18) has an adhesive layer (7), which is configured for the adhesive fastening of diffusers (8), which absorb light by means of a total reflection and emit it in unchanged form.

13. Component according to any one of the preceding claims 1 to 12, **characterised in that** the light-guide rods or plates are only used selectively at quite specific points, for example in the form of logos or writing, so the component can only be penetrated by light at these points.

14. Component according to any one of the preceding claims 1 to 13, **characterised in that** the light-guide rods or plates are equipped with differently coloured filters, in order to allow coloured patterns or images to become visible.

15. Component according to any one of the preceding claims 1 to 14, **characterised in that** the light-guide rods or plates can also be inserted obliquely into the component.

16. Method for producing a translucent multi-layer composite component for facades and other constructions, wherein the component predominantly has a material structure bound from concrete with light-conducting bodies, which, during the production of the component, are arranged in a predominantly parallel arrangement with respect to one another in the interior of the component and make the component translucent, the method being **characterised by** the following steps:
- producing an insulating layer (2) with light-guide rods (4) or plates passing through and interconnecting needles (11), which are flexurally rigid;
- producing a facing layer (1) by means of the insulating layer (2) and a concrete layer (14);
- lowering the insulating layer (2) into a sheathing (33), the base of which is filled with a concrete layer (14) made of SCC concrete which has not yet hardened;
- pressing the flexurally rigid light-guide rods (4) or plates into the concrete layer (14) to the base face of the sheathing (33), the mutually facing surfaces of the concrete layer (14) and the insulating layer (2) forming a composite;
- producing the support layer (3) by means of casting concrete material onto the further surface of the insulating layer (2) remote from the facing layer (1);
- removing the hardened multi-layer composite element (10) from the sheathing (33);
- grinding end faces (17, 18) of the multi-layer composite element (10) and exposing the light-absorbing and light-emitting end faces of the light-guide rods (4) or plates.

17. Method for producing a translucent multi-layer composite component for facades and other constructions, wherein the component predominantly has a material structure bound from concrete with light-guiding bodies, which, during the production of the component, are arranged in a predominantly parallel arrangement with respect to one another in the interior of the component and make the component translucent, the method being **characterised by** the following steps:
- producing an insulating layer with light-guide rods or plates passing through and interconnecting needles, which are flexurally rigid;
- lowering the insulating layer into a vertical sheathing;
- casting concrete, wood composite materials, mineral casting compounds, concrete polymer, clays, chalks, plaster, loam, plastics material compounds or similarly hardenable materials into the cavities between the sheathing and insulating layer;
- removing the hardened multi-layer composite element from the sheathing;
- grinding end faces of the multi-layer composite element and exposing the light-absorbing and light-emitting end faces of the light-guide rods or plates.

18. Method according to claim 16 or 17, **characterised in that** the device elements according to claims 1 to 15 required to apply the method and produce the device are used.

## Revendications

1. Elément de construction composite multicouche pour façades et autres ouvrages, étant précisé que l'élément de construction se compose d'un élément composite multicouche (10) qui présente sur sa face visible une couche de parement (1) derrière laquelle est disposée, au moins à une certaine distance, une couche isolante (2) qui est elle-même reliée, sur sa face arrière, à une couche porteuse (3), **caractérisé en ce que** la couche de parement (1) et/ou la couche porteuse (3) comportent des matériaux composites en bois, des masses coulées minérales, du béton polymère, des argiles, des chaux, du plâtre, de la glaise, des masses de matière plastique et des matériaux aptes à durcir de manière similaire, et **en ce que** les corps conducteurs de lumière sont conçus comme des barres (4) ou des plaques conductrices de lumière rigides en flexion qui, lors de la fabrication de l'élément de construction, sont disposées globalement parallèlement à l'intérieur dudit élément de construction et rendent celui-ci translucide, les couches (1, 2, 3), au moins, étant traversées toutes les trois par une ou plusieurs barres (4) ou plaques conductrices de lumière qui sont rigides en flexion.

2. Elément de construction selon la revendication 1, **caractérisé en ce qu'**il est conçu comme un élément composite multicouche (10) solide et autoporteur.

3. Elément de construction selon l'une des revendications 1 à 2 précédentes, **caractérisé en ce que** la couche isolante (2) de l'élément composite multicouche (10) est formée à partir d'une matière plastique en forme de plaque qui présente des propriétés isolantes améliorées et qui est conçue pour être résistante au liquide.

4. Elément de construction selon l'une des revendications 1 à 3, **caractérisé en ce que** la couche isolante (2) présente des creux traversants (16) qui sont traversés par les barres conductrices de lumière (4) dépassant de la face supérieure et de la face inférieure de la couche isolante (2), étant précisé que les barres conductrices dépassant d'une première face de la couche isolante (2) traversent jusqu'au fond une couche de béton (14) en béton SCC placée dans un coffrage (33) et non encore durcie et forment la couche de parement (1) apte à être traversée par une armature en treillis (21), et que la surface de la couche de béton (14) tournée vers la couche isolante (2) et la surface de la couche isolante (22) posée sur elle sont intimement liées.

5. Elément de construction selon l'une des revendications 1 à 4, **caractérisé en ce qu'**une seconde surface de la couche isolante (2) pourvue des barres conductrices de lumière saillantes (4) présente une masse de béton coulée qui enveloppe les barres conductrices de lumière saillantes (4) et, à l'état durci, forme la couche porteuse (3) qui est conçue pour pouvoir être traversée par une armature en treillis (21).

6. Elément de construction selon l'une des revendications 1 à 5 précédentes, **caractérisé en ce que** des éléments d'ancrage peuvent être introduits dans la couche isolante (2), qui sont conçus de préférence comme des broches de liaison profilées en U (11) et qui forment une liaison à transmission de charge entre la couche de parement (1), à travers des creux associés (16) de la couche isolante (2), et la couche porteuse (3).

7. Elément de construction selon la revendication 6, **caractérisé en ce que** la broche de liaison (11) présente une branche de base (12) qui est reliée d'une seule pièce à des branches latérales (13) qui lui font suite, étant précisé que les branches latérales (13) présentent un contour extérieur ondulé et/ou dentelé et forment une liaison améliorée dans les couches de béton (1, 3).

8. Elément de construction selon l'une des revendications 1 à 7 précédentes, **caractérisé en ce que** les barres conductrices de lumière (22, 25, 26, 27) sont formées à partir de faisceaux de fibres optiques 24, 31) qui présentent une stabilité à la flexion suffisante et reçoivent les forces de cisaillement nécessaires.

9. Elément de construction selon l'une des revendications 1 à 8 précédentes, **caractérisé en ce que** les plaques conductrices de lumière (28) présentent en coupe transversale une forme rectangulaire, carrée, ronde, ovale ou polygonale, étant précisé que la forme de la face frontale des plaques conductrices de lumière (28) qui reçoit la lumière est apte à être conçue différemment de la forme de la face frontale desdites plaques (28) qui émet la lumière.

10. Elément de construction selon l'une des revendications 1 à 9 précédentes, **caractérisé en ce que** les barres conductrices de lumière (4) sont conçues comme des fibres optiques (31) contenues dans des armures textiles ou un ensemble en maille ou en tissu et forment une structure plane textile (32) qui est intégrée dans la couche isolante (2) avec une forme en faisceau et/ou ondulée et/ou sous la forme d'un mat de fibres optiques à profil rond (30).

11. Elément de construction selon l'une des revendications 1 à 10 précédentes, **caractérisé en ce que** l'élément composite (10) est poli sur ses faces frontales (17, 18) et dégage, du côté de la face frontale (17), les face frontales des barres ou plaques conductrices de lumière (4) qui reçoivent la lumière, étant précisé que ces faces frontales reçoivent la lumière, la font passer par leur corps à travers toute la structure composite multicouche des couches (1, 2, 3) et la font ressortir sur la face frontale (18) traitée.

12. Elément de construction selon l'une des revendications 1 à 11 précédentes, **caractérisé en ce que** la face frontale (18) présente une couche de colle (7) qui est conçue pour fixer par collage des diffuseurs (8) qui reçoivent la lumière par réflexion totale et l'émettent sous une forme inchangée.

13. Elément de construction selon l'une des revendications 1 à 12 précédentes, **caractérisé en ce que** les barres ou plaques conductrices de lumière ne sont insérées que de manière sélective à des endroits bien définis, par exemple sous la forme de logos ou de graphismes, de sorte que l'élément de construction ne peut être traversé par la lumière qu'à ces endroits.

14. Elément de construction selon l'une des revendications 1 à 13 précédentes, **caractérisé en ce que** les barres ou plaques conductrices de lumière sont équipées de filtres de couleurs différentes, pour faire apparaître des motifs ou des images de couleur.

15. Elément de construction selon l'une des revendications 1 à 14, **caractérisé en ce que** les barres ou plaques conductrices de lumière sont aussi insérées en biais dans l'élément de construction.

16. Procédé pour fabriquer un élément de construction composite multicouche translucide pour façades et autres ouvrages, étant précisé que l'élément de construction comporte principalement une structure de matériau liée à partir de béton, avec des corps conducteurs de lumière qui, lors de la fabrication de l'élément de construction, sont disposés globalement parallèlement à l'intérieur de l'élément de construction et rendent celui-ci translucide, étant précisé que le procédé est **caractérisé par** les étapes qui consistent à :
- fabriquer une couche isolante (2) entrecoupée de barres (4) ou de plaques conductrices de lumière et de broches de liaison (11) qui sont rigides en flexion ;
- fabriquer une couche de parement (1) à l'aide de la couche isolante (2) et d'une couche de béton (14) ;
- abaisser la couche isolante (2) dans un coffrage (33) dont le fond est rempli avec une couche de béton (14) en béton SCC non encore durcie ;
- à enfoncer les barres (4) ou plaques conductrices de lumière dans la couche de béton (14) jusqu'à la surface du fond du coffrage (33), étant précisé que les surfaces de la couche de béton (14) et de la couche isolante (2) tournées l'une vers l'autre forment une liaison ;
- fabriquer la couche porteuse (3) par coulage de matériau en béton sur l'autre surface de la couche isolante (2), tournée vers la couche de parement (1) ;
- enlever l'élément composite multicouche (10) durci du coffrage (33) ;
- polir les faces frontales (17, 18) de l'élément composite multicouche (10) et dégager les surfaces frontales des barres (4) ou plaques conductrices de lumière qui reçoivent et émettent la lumière.

17. Procédé pour fabriquer un élément de construction composite multicouche translucide pour façades et autres ouvrages, étant précisé que l'élément de construction comporte principalement une structure de matériau liée à partir de béton, avec des corps conducteurs de lumière qui, lors de la fabrication de l'élément de construction, sont disposés globalement parallèlement à l'intérieur de l'élément de construction et rendent celui-ci translucide, étant précisé que le procédé est **caractérisé par** les étapes qui consistent à :
- fabriquer une couche isolante entrecoupée de barres ou plaques conductrices de lumière et de broches de liaison qui sont rigides en flexion ;
- abaisser la couche isolante dans un coffrage placé à la verticale ;
- couler dans les cavités entre le coffrage et la couche isolante du béton, des matériaux composites en bois, des masses coulées minérales, du béton polymère, des argiles, des chaux, du plâtre, de la glaise, des masses de matière plastique ou des matériaux aptes à durcir de manière similaire ;
- enlever l'élément composite multicouche (10) durci du coffrage (33) ;
- polir les faces frontales de l'élément composite multicouche et dégager les surfaces frontales des barres ou plaques conductrices de lumière qui reçoivent et émettent la lumière.

18. Procédé selon la revendication 16 ou 17, **caractérisé en ce que** les éléments de dispositif nécessaires à l'application du procédé et à la fabrication du dispositif selon les revendications 1 à 15 sont utilisés.
